Europäisches Patentamt

European Patent Office

Office européen des brevets

(19)

(11) Veröffentlichungsnummer: **0 070 394**
**B1**

# EUROPÄISCHE PATENTSCHRIFT

(12)

(45) Veröffentlichungstag der Patentschrift:
03.09.86

(21) Anmeldenummer: 82105351.9

(22) Anmeldetag: 18.06.82

(51) Int. Cl.⁴: **C 08 J 5/18,** C 08 J 5/12,
C 08 L 29/14, C 09 J 7/00,
C 03 C 27/10, C 03 C 27/12,
C 08 K 5/12, B 32 B 17/10

(54) **Weichmacherhaltige Folien aus teilacetalisierten Polyvinylalkoholen.**

(30) Priorität: 18.07.81 DE 3128530

(43) Veröffentlichungstag der Anmeldung:
26.01.83 Patentblatt 83/4

(45) Bekanntmachung des Hinweises auf die Patenterteilung:
03.09.86 Patentblatt 86/36

(84) Benannte Vertragsstaaten:
AT BE CH DE FR GB IT LI LU NL SE

(56) Entgegenhaltungen:
EP-A-0 010 718
CH-A-613 217
CH-A-618 205
DE-A-2 820 780

**Die Akte enthält technische Angaben, die nach
dem Eingang der Anmeldung eingereicht wurden
und die nicht in dieser Patentschrift enthalten sind.**

(73) Patentinhaber: **DYNAMIT NOBEL
AKTIENGESELLSCHAFT, Postfach 1209, D-5210
Troisdorf, Bez. Köln (DE)**

(72) Erfinder: **Beckmann, Rolf, Dr., Seehofstrasse 100,
D-5200 Siegburg (DE)**
Erfinder: **Schaaf, Hans-Werner, Auf dem Acker 17,
D-5216 Niederkassel- Mondorf (DE)**
Erfinder: **Spielau, Paul Dr., Van- Gogh- Platz 10,
D-5210 Troisdorf- Eschmar (DE)**

0 070 394

## Beschreibung

Gegenstand der vorliegenden Erfindung sind weichmacherhaltige Folien aus teilacetalisierten Polyvinylalkoholen, die als Klebefolie in Verbundsicherheitsgläsern eingesetzt werden. Insbesondere befaßt sich die vorliegende Erfindung mit neuen Polyvinylbutyralfolien und der Verwendung dieser Folien zur Herstellung von Verbundsicherheitsgläsern.

Verbundsicherheitsgläser bestehen im allgemeinen aus zwei Silikatglasscheiben und eine, die Glasscheiben verbindende, Klebefolie. Gegebenenfalls kann eine der Silikatglasscheiben durch eine Kunststoffscheibe ersetzt werden. Solche Verbundsicherheitsscheiben werden hauptsächlich als Windschutzscheiben bei Fahrzeugen, insbesondere Kraftfahrzeugen eingesetzt; sie können jedoch auch im Bausektor verwendet werden, wobei, je nach ihrer Verwendung, auch mehr als zwei Silikat- oder Kunststoffscheiben durch Klebefolien verbunden werden. Solche Mehrfachverbunde dienen z.B. als Verbundpanzergläser.

Als Klebefolien in diesen Verbundgläsern dienen hauptsächlich weichgemachte teilacetalisierte Polyvinylalkoholfolien. Die für ihre Herstellung notwendigen teilacetalisierten Polyvinylalkohole werden hergestellt durch Verseifung von Polyvinylacetat und anschließender Acetalisierung mit aliphatischen Aldehyden, wie z.B. Formaldehyd, Acetaldehyd, Butyraldehyd und anderen Aldehyden mit 3 bis 10 C-Atomen. Die Verseifung ist im allgemeinen nicht vollständig durchgeführt, so daß die Polyvinylalkohole meist noch 0,5 bis 5 Gew.-% Acetylgruppen, berechnet als Vinylacetatgruppen, enthalten. Auch die Acetalisierung wird im allgemeinen nicht vollständig durchgeführt, so daß der für die Herstellung der Folien eingesetzte teilacetalisierte Polyvinylalkohol meist noch freie OH-Gruppen enthält; beim teilbutyralisierten Polyvinylalkohol (im folgenden mit PVB bezeichnet) kann dieser OH-Gehalt zwischen 10 und 27 %, berechnet als Vinylalkohol, betragen. Im Sinne der vorliegenden Erfindung sollen alle diese Harze unter den Begriff teilacetalisierte Polyvinylalkohole fallen.

Bei der Herstellung von Verbundsicherheitsgläsern werden diese teilacetalisierten Polyvinylalkohole mit einem bestimmten Weichmachergehalt als Folien eingesetzt. Die Art und Menge des eingesetzten Weichmachers beeinflussen die Eigenschaften des Verbundsicherheitsglases. In der Praxis hat sich deshalb herausgestellt, daß ein besonders splittersicheres Verbundsicherheitsglas als Zwischenfolie eine PVB-Folie haben soll, die einen Weichmachergehalt von 15 bis 40 Gew.-%, vorzugsweise 25 bis 31 Gew.-% besitzt und deren Gehalt an freien OH-Gruppen 10 bis 25 Gew.-%, vorzugsweise 16 bis 23 Gew.-%, bezogen auf weichmacherfreies PVB-Harz, beträgt. Der Feuchtigkeitsgehalt einer solchen PVB-Folie soll zwischen 0,2 und 0,9 Gew.-% liegen.

Als Weichmacher für solche PVB-Folien wird in der Praxis der Triäthylenglycolester der 2-Äthylbuttersäure weitverbreitet eingesetzt. Die Verwendung von Dibutylsebacat, Di-(hexyl)-adipat und Dioctylphthalat ist beschrieben worden.

Trotz der Tatsache, daß noch viele andere Weichmacher für teilacetalisierte Polyvinylbutyrale bekannt sind, haben bis heute nur sehr wenige Weichmacher eine weitverbreitete technische Verwendung in Zwischenschichten aus teilbutyralisierten Polyvinylalkoholen für Verbundsicherheitsglas gefunden. Der Grund hierfür ist, daß PVB ein komplexes Harz ist, das mit einer großen Variation der Menge an Butyral-, Hydroxyl- und restlichen Estergruppen hergestellt werden kann, wobei die Variationsbreite noch durch die verschiedenen möglichen Molekulargewichte und die Art der Verteilung der Hydroxylgruppen an der Polymerkette gegeben wird. So scheiden eine große Anzahl verträglicher bzw. teilweise verträglicher Weichmacher für die Verwendung in Zwischenschichten für Verbundsicherheitsglas aus, da sehr strenge Leistungsanforderungen von dem Polymer und dem Weichmacher zu erfüllen sind. Dioctylphthalat z.B. hat aus diesen Gründen keine praktische Bedeutung für PVB-Zwischenschichten finden können.

Zu den vielen Leistungsanforderungen, die an Zwischenschichten für Verbundsicherheitsglas gestellt werden, zählen u.a. eine hohe Folienzähigkeit, eine gute Widerstandsfähigkeit gegen Schichtentrennung und eine Kantenstabilität, die durch die Fähigkeit, Wasser zu binden, charakterisiert ist. Dabei dient als Maß für die Folienzähigkeit die Zugspannung bei 100 % Dehnung.

In der Literatur sind zwar schon eine Reihe Phthalsäureester als mit PVB verträglich beschrieben worden, jedoch gibt es keinerlei Hinweise über ihre Verwendbarkeit in in PVB-Zwischenschichten für Verbundsicherheitsglas. Die Aussage über die Verträglichkeit z.B. in "Modern Plastics Encyclopedia" 1975 - 1976 auf den Seiten 698 und 699 ist viel zu wenig spezifiziert, als daß daraus eine direkte Nutzanwendung möglich ist. Sie ist in den angegebenen Beispielen nicht unter immer gleichen Voraussetzungen erfolgt. Aus diesen Angaben mußte der Fachmann den Schluß ziehen, daß zu den verträglichen Estern solche aus iso-$C_{10}$-Alkoholen bis iso-$C_{13}$-Alkoholen gezählt werden können, während Ester mit kurzkettigeren iso-$C_7$-Alkoholen bis iso-$C_8$-Alkoholen als beschränkt verträglich eingestuft werden.

Es bestand daher die Aufgabe, Klebefolien für Verbundsicherheitsglas auf der Basis von weichmacherhaltigen, teilacetalisierten Polyvinylalkoholen zu schaffen, bei denen Phthalsäureester allein bzw. im Gemisch mit Glycolestern verwendet werden, die, verglichen mit bekannten Klebefolien für Verbundsicherheitsgläser, infolge geringerer Wasseraufnahme eine gute Kantenstabilität bzw. Widerstandsfähigkeit gegen Schichtentrennung aufweisen und die ausgezeichnete Folienzähigkeit bei Beibehaltung der übrigen wichtigen mechanischen Eigenschaften besitzen.

Die vorliegende Erfindung betrifft daher weichmacherhaltig Folien aus teilacetalisierten Polyvinylalkoholen, dadurch gekennzeichnet, daß sie als Weichmacher Gemische aus

a) Estern organischer, cyclischer Säuren mit Alkoholen von 4 bis 10 Kohlenstoffatomen

2

# 0 070 394

und
b) Estern von Glycolen und aliphatischen einbasischen Säuren mit 4 bis 10 Kohlenstoffatomen im Verhältnis 85: 15 bis 15: 85 Gew.-% enthalten.

Folien aus derart weichgemachten Harzen besitzen vorteilhaftere mechanische Eigenschaften und geringere Wasseraufnahme als Folien, die mit Glycolestern allein hergestellt wurden.

In der DE-OS 28 20 780 wird die Verwendung von Phthalsäureestern beschrieben, deren Verträglichkeit mit teilacetalisierten Polyvinylalkoholen aufgrund ihrer langkettigen Alkoholkomponenten so gering ist, daß sie allein nicht verwendbar sind. Ihre Anwendung wird erst dadurch ermöglicht, daß man sie mit gut gelierenden Estern von Sauerstoffsäuren des Phosphors vermischt.

Esterweichmacher aus organischen, cyclischen Säuren der vorliegenden Erfindung sind bevorzugt Ester der Phthalsäure mit aliphatischen und/oder aromatischen Alkoholen, die 4 bis 10 Kohlenstoffatome enthalten. Es sind Mischester aus entsprechenden Alkoholgemischen ebenso geeignet wie Estergemische, wobei die aliphatischen Alkohole geradkettige oder verzweigte Alkohole sein können, z.B. Dibutyl-, Diamyl-, Dihexyl-, Diheptyl-, Dioctyl-, Dinonyl-, Didecyl-, Dimethylglycol-, Diäthylglycol-, Dibutylglycol-, Dioctylhexyl-, Dibenzylphthalat, Butylbenzylphthalat, Butylcyclohexylphthalat, Butyloctylphthalat, Hexyldecylphthalat etc. Ester der Phthalsäure mit Glycolsäureestern können ebenfalls Anwendung finden.

Als Glycolester sind z.B. Ester eines Polyäthylenglycols mit Äthylbutter-, Capron-, Oenanth-, Capryl-, Äthylhexan-, Pelargon-, Caprinsäure geeignet. Das Polyäthylenglycol ist bevorzugt ein Di-, Tri- oder Tetraäthylenglycol. Beispiele für solche erfindungsgemäß einsetzbaren Ester sind Triäthylenglycol-di-2-äthylbutyrat, Triäthylenglycoldiheptanoat, Diäthylenglycoldipelargonat oder die Tetraäthylenglycolester der Valerian-, Äthylbutter- oder Äthylhexansäure. Es lassen sich erfindungsgemäß aber auch die Ester des Glycerins oder der Glycolsäure mit oben genannten Säuren einsetzen.

Die erfindungsgemäß einsetzbaren, teilacetalisierten Polyvinylalkohole können 5 bis 30 Gew.-% Hydroxylgruppen, berechnet als Vinylalkohol besitzen. Bevorzugt liegt der Hydroxylgruppengehalt zwischen 16 und 23 Gew.-%.

Die Menge des Weichmachergemisches kann 10 bis 40 Gew.-%, vorzugsweise 20 bis 35 Gew.-%, bezogen auf das gesamte Foliengewicht, betragen. Sie richtet sich unter anderem nach dem Acetalisierungsgrad des Polyvinylalkohols und dem zur Acetalisierung eingesetzten Aldehyd, sowie nach der Art der eingesetzten einzelnen Weichmacher. Sie wird im allgemeinen auch so gewählt, daß die Shore Härte A der erfindungsgemäßen Folie bei 23 °C zwischen 100 und 50, vorzugsweise zwischen 90 und 30, liegt.

Das Verhältnis zwischen den Estern organischer cyclischer Säuren und den Glycolestern gemäß Anspruch 1 richtet sich hauptsächlich nach der Menge und Verträglichkeit der Ester in dem teilacetalisierten Polyvinylalkohol. Es richtet sich weiterhin nach den Eigenschaften der ausgewählten einzelnen Weichmacher und des verwendeten teilacetalisierten Polyvinylalkohols sowie den Anforderungen an die herzustellende Folienmasse.

Außer der oben genannten Verbesserung der mechanischen Eigenschaften und der geringeren Fähigkeit, Wasser zu binden und dadurch eine bessere Kantenstabilität der Verbundsicherheitsgläser zu gewährleisten, haben die Verbundsicherheitsglas-Klebefolien mit Glycolestern als Weichmacher noch den Vorteil, daß die beanspruchten Gemische aus Glycolestern mit Esternorganischer cyclischer Säuren in größeren Mengen eingesetzt werden können als Glycolester allein, ohne daß die guten Werte der mechanischen Folienfestigkeit verloren gehen. Hierdurch besteht die Möglichkeit, die erfindungsgemäßen Folien bei niedrigeren Massetemperaturen schonender zu extrudieren und die thermische Belastung der Masse zu mindern.

Die Herstellung der erfindungsgemäßen Folien kann auf beliebige, an sich bekannte Weise erfolgen. Nach Vermischen der Massenbestandteile wird die erhaltene Folienmasse zu den gewünschten Folien verarbeitet. Die Massen sind dabei extrudierbar oder kalandrierbar, spritzgießbar oder preßbar. Abfälle lassen sich in hervorragender Weise wiederverarbeiten und z.B. durch Extrudieren zu Folien verformen.

Die Folienmassen lassen sich weiterhin durch Verwendung geeigneter an sich bekannter Hilfsmittel, wie Stabilisatoren, Farbstoffe, Pigmente, Füllstoffe, haftungs- und blockingbeeinflussenden Zusätze, modifizieren, so daß auch entsprechend modifizierte Folien Gegenstand der vorliegenden Erfindung sind.

Die Verbundsicherheitsgläser, zu denen die erfindungsgemäßen Folienmassen verarbeitet werden, bestehen aus mindestens einer Schicht dieser erfindungsgemäßen Folienmassen. Sie können mit ungehärtetem, gehärtetem, planem, gebogenem, bedampftem, bedrucktem, gefärbtem, geätztem, strukturiertem Silikattafelglas, das gegebenenfalls eine Drahteinlage besitzt sowie mit farbloser, farbig transparenter, farbig gedeckter, bedruckter, erfindungsgemäß hergestellter Folie, die gegebenenfalls eingelegte Drähte, Drahtnetze, Gewebe oder andere Gegenstände enthalten, auf an sich bekannte Weise hergestellt werden. Die Dicken der Silikatgläser bzw. der erfindungsgemäß hergestellten Folien sind entsprechend dem Verwendungszweck variabel auswählbar, ebenso wie die Anzahl der einzelnen Schichten des Verbundgegenstandes.

Daraus ergibt sich die Anwendungsmöglichkeit der die erfindungsgemäßen Folien als Klebefolien enthaltenen Verbundgläser im Bausektor bei Türen- und Türanlagen, bei Fenster- und Fensteranlagen, bei Brüstungen von Geländern, Balkonen oder Fassaden, bei Trennwänden als Raumteiler, Balkonabtrennungen oder Grundstückseinfriedungen, bei Dächern oder Dachteilen von Terrassen, Lichtdächern oder Gewächshäusern, bei Zellen für Telefon- oder Computeranlagen, Vitrinen, Kassenräumen, Gefängnissen oder bei explosions- bzw. implosionsgefährdeten Räumen jeweils als Sicherheitsglas zum Schutz gegen Durchstoßen, Einbruch, Beschuß, Feuer, Schall, Kälte, Wärme, Hitze gegebenenfalls mit Alarm- bzw.

3

Heizdrähten.

Im Fahrzeugsektor kommt die Verglasung von Kraftfahrzeugen, Schienenfahrzeugen, Schiffen und Flugzeugen bei Windschutz-Heck- oder Seitenscheiben, Türen, Trennwänden etc. in Frage.

Die erfindungsgemäßen Folienmassen sind außerdem in hervorragendem Maße geeignet, Verbunde mit transparenten, zähelastischen Kunststoffen herzustellen.

Außer dem Polycarbonat können als transparente Kunststoffscheiben auch solche aus Polymethylmethacrylat, Polyäthylenterephthalat, Hart-PVC, Polyamid, Celluloseester, Styrol-Acrylnitril-Polymere u.a.m. eingesetzt werden.

Weiterer Gegenstand der Erfindung ist daher die Verwendung der weichmacherhaltigen Folien gemäß einem der Ansprüche 1 bis 5 zur Herstellung von Verbundsicherheitsgläsern sowie als Klebefolie für das ein- oder beidseitige Verbinden einer oder mehrerer Silikatglasscheiben und/oder transparenter zähelastischer Kunststoffscheiben.

**Beispiel 1 (Vergleichsbeispiel)**

Einem handelsüblichen, teilbutyralisierten Polyvinylalkoholharz mit einem Hydroxylgruppengehalt von 20,7 Gew.% berechnet als Vinylalkohol, wurden verschiedene Mengen Triäthylenglycol-di-2-äthylbutyrat als Weichmacher auf dem Walzenstuhl untergemischt. Aus den Walzfellen wurden in einer Presse mehrere Folien von 0,76 mm Dicke mit seidenmatter Oberflächenprägung hergestellt und durch Lagerung bei 23 °C und einer relativen Luftfeuchtigkeit von 60 % geprüft, ob der untergemischte Weichmacher ausschwitzt. Ferner wurden die Reißfestigkeit, Reißdehnung, Zugspannung bei 100 % und der Kälteschlagwert bestimmt. Die Messung des Kälteschlagwertes erfolgte nach der Methode VDCh 22-02 an Schulterproben (mit einem Profil S 3 gemäß DIN 53 504) in der Weise, daß die tiefste Temperatur gesucht wurde, bei der höchstens eine von sechs zu einer Schlaufe gebogenen Proben durch einen 200 g-Fallhammer aus einer Fallhöhe von 200 mm gebrochen wird. Es wurden folgende Werte erhalten:

| Weichmachermenge (Gew.-%) | 28 | 30 | 32 |
|---|---|---|---|
| Ausschwitzen | nein | nein | nein |
| Reißfestigkeit ($N/mm^2$ x 10) | 269 | 247 | 221 |
| Zugspannung ($N/mm^2$ x 10) bei 100 % Dehnung | 32 | 26 | 15 |
| Kälteschlagwert ($^{\circ}C$) | -55 | -55 | -55 |

Der Weichmacher zeigt zwar eine gute Verträglichkeit zu der PVB-Folie, wenn er in Mengen $\geq$ 30 % eingesetzt wird, jedoch ist dann die Reißfestigkeit und bei einem Anteil von $\geq$ 32 % auch die Zugspannung ungenügend, so daß dieser Weichmacher nicht in Mengen $\geq$ 30 % bei Beibehaltung guter Werte einsetzbar ist.

**Beispiel 2 (Vergleichsbeispiel)**

In gleicher Weise wie in Beispiel 1 wurden verschiedene Mengen verschiedener Phthalsäureester einem PVB-Harz mit einem Hydroxylgruppengehalt von 20,7 Gew.-% untergemischt und Folien daraus hergestellt. Die Ergebnisse der Qualitätsprüfung solcher Folien sind in Tabelle 1 zusammengestellt:

## 0 070 394

**Tabelle 1**

| Alkoholkomponente des Phthalsäureesters | Menge (Gew.%) | Ausschwitzen | Reißfestigkeit $N/mm^2 \times 10^2$ | Kälteschlagwert °C | Zugspannung $N/mm^2 \times 10$ 100 % Dehnung |
|---|---|---|---|---|---|
| n-$C_4$-Alkohol | 28 | nein | 251 | -45 | 36 |
| | 30 | nein | 228 | -50 | 28 |
| | 32,5 | nein | 194 | -55 | 19 |
| | 35 | nein | 153 | -55 | 15 |
| n-$C_6$-Alkohol | 28 | nein | 273 | -50 | 57 |
| | 30 | nein | 259 | -50 | 42 |
| | 32,5 | nein | 218 | -55 | 36 |
| | 35 | nein | 182 | -55 | 23 |
| n-$C_7$-Alkohol | 28 | nein | 293 | -50 | 74 |
| | 30 | nein | 281 | -55 | 53 |
| | 32,5 | nein | 255 | -55 | 40 |
| | 35 | nein | 222 | -55 | 26 |
| n-$C_8$-Alkohol | 28 | nein | 294 | -55 | 78 |
| | 30 | nein | 273 | -55 | 58 |
| | 32,5 | ja | 250 | -55 | 48 |
| | 35 | ja | 212 | -55 | 35 |
| 80 % $C_6$ 10 % $C_8$ 10 % $C_{10}$ | 28 | nein | 306 | -45 | 92 |
| | 30 | nein | 282 | -50 | 59 |
| | 32,5 | nein | 239 | -55 | 34 |
| | 35 | nein | 221 | -55 | 33 |
| 40 % $C_7$ 40 % $C_8$ 20 % $C_9$ | 28 | nein | 278 | -50 | 98 |
| | 30 | nein | 264 | -55 | 48 |
| | 32,5 | nein | 242 | -55 | 29 |
| | 35 | ja | 217 | -55 | 32 |

**Beispiel 3**

Ein im Handel erhältliches PVB-Harz mit einem Hydroxylgruppengehalt von 20,7 Gew.-% (berechnet als Vinylalkohol) wurde auf dem Walzenstuhl mit unterschiedlichen Mengen von Triäthylenglycol-di-2-äthylbutyrat (3 GH) und einem Mischester (C 6/10) aus Phthalsäure und einem Gemisch von $C_6$-, $C_8$-, $C_{10}$ Alkohol (80:10:10) vermischt. Aus den Walzfellen wurden Folien von 0,76 mm Dicke gepreßt, deren Eigenschaften aus Tabelle 2 hervorgehen. Die Bestimmung der Eigenschaften erfolgte in der im Beispiel 1 angegebenen Weise. Keine der Rezepturen schwitzt aus.

5

**Tabelle 2**

| Weichmachergehalt Gew.-% | | | Reiß-festig-keit $N/mm^2 \times 10$ | Zugspannung $N/mm^2 \times 10$ 100 % Dehnung | Kälteschlag-wert °C |
|---|---|---|---|---|---|
| 3 GH | C6/10 | Gesamt | | | |
| 14 | 14 | 28 | 266 | 37 | -50 |
| 8 | 20 | 28 | 285 | 39 | -50 |
| 15 | 15 | 30 | 276 | 28 | -50 |
| 15,5 | 15,5 | 31 | 249 | 27 | -55 |

Proben aller Folien wurden weiterhin zu Verbundsicherheitsgläsern verarbeitet, indem sie bei 32 % relativer Luftfeuchtigkeit klimatisiert, anschließend zwischen zwei Silikatglasscheiben gelegt wurden und daraufhin der Verbund durch Erhitzen auf 130 bis 150 °C bei einem Druck von 12 bar hergestellt wurde. Die erhaltenen Verbundsicherheitsgläser wurden auf die Haftung zwischen dem Silikatglas und der PVB-Folie nach der Pummelmethode, wie sie z.B. in der DE-PS 24 10 153 beschrieben ist, untersucht. Alle erhaltenen Verbundsicherheitsgläser zeigten Pummelwerte von 10.

**Beispiel 4**

Analog Beispiel 3 wurden PVB-Folien mit einem Hydroxylgruppengehalt von 20,7 Gew.-% mit wechselnden Gehalten an Triäthylenglycol-diheptanoat (3 G 7) und Phthalsäureheptylester (C 7) hergestellt und die Eigenschaftswerte bestimmt. Die Ergebnisse gehen aus Tabelle 3 hervor. In allen Fällen waren die Weichmachergemische mit dem PVB-Hart verträglich.

**Tabelle 3**

| Weichmachergehalt Gew.-% | | | Reiß-festig-keit $N/mm^2 \times 10$ | Zugspannung $N/mm^2 \times 10$ 100% Dehnung | Kälte-schlag-wert °C |
|---|---|---|---|---|---|
| 3 G 7 | C 7 | Gesamt | | | |
| 14 | 14 | 28 | 283 | 46 | -50 |
| 8 | 20 | 28 | 289 | 54 | -50 |
| 14,5 | 14,5 | 29 | 263 | 31 | -55 |
| 15 | 15 | 30 | 236 | 27 | -55 |
| 16 | 16 | 32 | 230 | 26 | -55 |

Verbundsicherheitsgläser aus diesen Folien hatten eine Pummelhaftung von 10.

6

**Beispiel 5**

Analog Beispiel 3 wurde ein PVB-Harz mit einem Hydroxylgruppengehalt von 20,7 Gew.-%, berechnet als Vinylalkohol, mit Triäthylenglycol-diheptanoat (3 G 7) und Burylphthalat (C 4) in verschiedenen Mengenverhältnissen bei einem Gesamtweichmachergehalt von 28 Gew.-% hergestellt. Die Ergebnisse gehen aus Tabelle 4 hervor. Die Weichmachergemische waren mit dem PVB-Harz in allen Fällen verträglich.

**Tabelle 4**

| Weichmachergehalt Gew.-% | | | Reißfestigkeit $N/mm^2 x 10$ | Zugspannung $N/mm^2$ x 10 100% Dehnung | Kälteschlagwert $^oC$ |
|---|---|---|---|---|---|
| 3 G 7 | C 4 | Gesamt | | | |
| 14 | 14 | 50:50 | 256 | 31 | -50 |
| 12 | 16 | 43:57 | 256 | 28 | -50 |
| 10 | 18 | 36:64 | 257 | 26 | -50 |
| 8 | 20 | 29:71 | 254 | 27 | -50 |
| 6 | 22 | 21:79 | 270 | 31 | -50 |

**Beispiel 6**

Analog Beispiel 3 wurde ein PVB-Harz mit einem Hydroxylgruppengehalt von 20,7 Gew.-%, berechnet als Vinylalkohol, mit verschiedenen Weichmachern hergestellt. Der Gesamtweichmachergehalt der Folienmassen betrug 28 Gew.-%. Als Glycolester ist wie in Beispiel 4 Triäthylenglycol-diheptanoat (3 G 7) einerseits und als Ester organischer cyclischer Säuren sind andererseits verschiedene Phthalsäureester ausgewählt worden. Das Mischungsverhältnis betrug 1:1. Die eingesetzten Weichmacher und die Eigenschaften der erhaltenen Folien gehen aus Tabelle 5 hervor. Alle Weichmachergemische waren mit dem PVB-Harz verträglich.

Tabelle 5

| | Reiß-festig-keit $N/mm^2 x 10$ | Zugspannung $N/mm^2$ x 10 100 % Dehnung | Kälte-schlag-wert °C |
|---|---|---|---|
| n-C$_7$,C$_8$,C$_9$-Phthalat | 257 | 40 | -50 |
| n-C$_8$-Phthalat | 259 | 48 | -50 |
| i-C$_8$-Phthalat | 272 | 62 | -45 |
| n-C$_7$, i-C$_{10}$-Phthalat | 289 | 39 | -50 |
| n-C$_6$,C$_7$,C$_8$,C$_{10}$-Phthalat | 260 | 51 | -55 |
| n-C$_8$,C$_{10}$-Phthalat | 279 | 43 | -50 |
| Butyl-,Benzylphthalat | 268 | 43 | -35 |
| Butyl-,Cyclohexyl-phthalat | 268 | 34 | -45 |
| Methylglykolphthalat | 259 | 23 | -50 |
| Äthylglykolphthalat | 280 | 27 | -50 |
| Butylglykolphthalat | 270 | 32 | -45 |

Verbundsicherheitsgläser aus diesen Folien hatten eine Pummelhaftung von 10.

**Beispiel 7**

Es wurden ein PVB-Harz mit einem Hydroxylgruppengehalt von 18,4 Gew.-%, berechnet als Vinylalkohol, analog Beispiel 3 mit insgesamt 30 Gew.-% verschiedener Glycolester und Ester organischer cyclischer Säuren jeweils im Mischungsverhältnis 1:1 zu Folien verarbeitet. Die Reißfestigkeiten sind in Tabelle 6 angegeben. In allen Fällen waren die Weichmachergemische mit den PVB-Harzen verträglich. Aus diesen Folien wurden Verbundsicherheitsgläser hergestellt; die Pummelhaftung war 10.

**Tabelle 6**

| PVA-Gehalt Gew.-% vom PVB-Harz | Weichmacher | Reiß-festigkeit $N/mm^2$ x 10 |
|---|---|---|
| 18,4 | Triäthylenglycol-diheptanoat Dibutylphthalat | 122 |
| 18,4 | Triäthylenglycol-diheptanoat Hexyldecylphthalat | 158 |
| 18,4 | Triäthylenglycol-diheptanoat Octyldecylphthalat | 203 |
| 18,4 | Triäthylenglycol-caprylat/ caprinat Hexyldecylphthalat | 187 |
| 18,4 | Triäthylenglycol-caprylat/ caprinat Octyldecylphthalat | 194 |

**Beispiel 8**

Es wurden PVB-Harze mit einem Hydroxylgruppengehalt von 20,7 Gew.-% bzw. 22,3 Gew.-% bzw. 26,8 Gew.-%. berechnet als Vinylalkohol, analog Beispiel 3 mit insgeeamt 30 Gew.-% verschiedener Glycolester und Ester organischer cyclischer Säuren jeweils im Mischungsverhältnis 1:1 zu Folien verarbeitet. In allen Fällen konnte kein Ausschwitzen des Weichmachers festgestellt werden. Die Reißfestigkeiten sind in Tabelle 7 zusammengestellt. Die Verbundsicherheitsgläser aus diesen Folien hatten eine Pummelhafrung von 10.

**Tabelle 7**

| PVA-Gehalt Gew.-% vom PVB-Harz | Weichmacher | Reiß-festigkeit $N/mm^2 \times 10$ |
|---|---|---|
| 22,3 | Triäthylenglycol-diheptanoat Dibutylphthalat | 258 |
| 26,8 | Triäthylenglycol-diheptanoat Dibutylphthalat | 279 |
| 22,3 | Triäthylenglycol-diheptanoat Hexyldecylphthalat | 248 |
| 22,3 | Triäthylenglycol-di-2-äthylbutyrat Dibutylphthalat | 242 |
| 26,8 | Triäthylenglycol-di-2-äthylbutyrat Dibutylphthalat | 271 |
| 20,7 | Tetraäthylenglycol-di-2-äthyl-hexanoat Dibutylphthalat | 221 |

**Beispiel 9**

Es wurden verschiedene Folien aus den Vergleichsbeispielen 1 und 2 sowie den erfindungsgemäßen Beispielen 3 und 5, entsprechend Beispiel 3, zu Verbundsicherheitsglas verarbeitet und die Wassergehalte der Folien im Verbund infrarotspektroskopisch bestimmt. Tabelle 7 gibt die Ergebnisse an. Die Zahlenwerte zeigen die unterschiedliche Bereitschaft der Folien zur Wasseraufnahme.

**Tabelle 8**

| Gesamt-weichmacher-gehalt Gew.-% | Weichmacher-art | Mischungs-verhältnis | Wasser-gehalt |
|---|---|---|---|
| 28(Vergleich) | 3 GH | - | 0,53 |
| 28(Vergleich) | 3 G 7 | - | 0,54 |
| 28(Vergleich) | C 4 | - | 0,49 |

## Tabelle 8-Fortsetzung

| Gesamt-weichmacher-gehalt Gew.-% | Weichmacher-art | Mischungs-verhältnis | Wasser-gehalt |
|---|---|---|---|
| 28(Vergleich) | C 7 | – | 0,42 |
| 28(Vergleich) | C 8 | – | 0,43 |
| 28(Vergleich) | C 6/10 | – | 0,42 |
| 28(Vergleich) | C 7/9 | – | 0,42 |
| 28 | 3 G 7 + C 7 | 50:50 | 0,47 |
| 28 | 3 G 7 + C 7 | 43:57 | 0,46 |
| 28 | 3 G 7 + C 7 | 36:64 | 0,45 |
| 28 | 3 G 7 + C 7 | 29:71 | 0,45 |
| 28 | 3 GH + C 6/10 | 50:50 | 0,46 |
| 28 | 3 GH + C 6/10 | 29:71 | 0,44 |
| 30 | 3 GH + C 6/10 | 50:50 | 0,46 |
| 31 | 3 GH + C 6/10 | 50:50 | 0,46 |
| 32 | 3 GH + C 6/10 | 50:50 | 0,47 |

3 GH = Triäthylenglycol-di-2-äthylbutyrat
3 G 7 = Triäthylenglycol-diheptanoat
C 7 = n-Heptylphthalat
C 8 = n-Octylphthalat
C 6/10 = Hexyl-Decylphthalat

**Beispiel 10**

Es wurden 0,76 mm dicke Folien aus
a) 72 Teilen eines handelsüblichen PVB-Harzes und 28 Teilen Triäthylenglycol-di-2-äthylbutyrat (Rezeptur a)
b) 72 Teilen des gleichen PVB-Harzes und 28 Teilen eines Weichmachergemisches, bestehend aus gleichen Teilen Triäthylenglycol-di-2-äthylbutyrat und einem Mischester aus Phthalsäure und einem Gemisch von Hexanol, Octanol und Decanol (Rezeptur b)
c) 69 Teilen des gleichen PVB-Harzes und 31 Teilen des unter b) beschriebenen Weichmachergemisches (Rezeptur c)

extrudiert.

Die drei Foliensorten enthielten so viel an sich bekanntes Antihaftmittel, daß die Pummelhaftung nach der in Beispiel 3 beschriebenen Klimatisierung und Verarbeitung zu Verbundsicherheitsglas bei einem Wert zwischen 2 und 4 lag.

Von den drei Foliensorten wurden die mechanischen Eigenschaften bestimmt, und die drei Verbundsicherheitsglassorten wurden einem Kugelfallversuch nach DIN 52 306 unterzogen. Aus diesen Prüfungen ergaben sich folgende Ergebnisse:
Weichmacher- a b c > >
ezeptur

| Weichmacher- rezeptur | a | b | c |
|---|---|---|---|
| Reißfestigkeit (N/mm$^2$ x 10) | 250 | 245 | 230 |
| Reißdehnung (%) | 270 | 275 | 280 |
| Zugspannung (N/mm$^2$ x 10) bei 100 % Dehnung | 26 | 25 | 25 |
| Pummelwert | 3 | 4 | 3 |
| Wassergehalt (Gew.-%) | 0,52 | 0,46 | 0,48 |
| Fallhöhe (m) | 6,50 | 6,50 | 6,50 |

**Patentansprüche**

1. Weichmacherhaltige Folien aus teilacetelisierten Polyvinylalkoholen, dadurch gekennzeichnet, daß sie als Weichmacher Gemische aus
a) Estern organischer, cyclischer Säuren mit Alkoholen von 4 bis 10 Kohlenstoffatomen und
b) Estern von Glycolen und aliphatischen einbasischen Säuren mit 4 bis 10 Kohlenstoffatomen im Verhältnis 85: 15 bis 15: 85 Gew.-% enthalten.

2. Weichmacherhaltige Folien gemäß Anspruch 1, dadurch gekennzeichnet, daß sie als Ester organischer cyclischer Säuren Ester der Phthalsäure und als Ester von Glycolen Ester des Di-, Tri- oder Tetraäthylenglycols enthalten.

3. Weichmacherhaltige Folien gemäß einem der Ansprüche 1 bis 2, dadurch gekennzeichnet, daß sie das Weichmachergemisch in Mengen von 10 bis 40 Gew.-%, vorzugsweise 20 bis 35 Gew.-%, bezogen auf das Gesamtgewicht der Folie enthalten.

4. Weichmacherhaltige Folien gemäß einem der Ansprüche 1 bis 3, dadurch gekennzeichnet, daß der teilacetalisierte Polyvinylalkohol einen Hydroxylgruppengehalt von 5 bis 30 Gew.-%, vorzugsweise 16 bis 23 Gew.-%, berechnet als Polyvinylalkohol, besitzt.

5. Weichmacherhaltige Folien gemäß einem der Ansprüche 1 bis 4, dadurch gekennzeichnet, daß sie eine Shore Härte A bei 23 °C zwischen 100 und 20, vorzugsweise zwischen 90 und 30, besitzen.

6. Verwendung von weichmacherhaltigen Folien gemäß einem der Ansprüche 1 bis 5 zur Herstellung von Verbundsicherheitsgläsern.

7. Verwendung von weichmacherhaltigen Folien gemäß einem der Ansprüche 1 bis 6 als Klebefolie für das ein- oder beidseitige Verbinden einer oder mehrerer Silikatglasscheiben und/oder transparenter zähelastischer Kunststoffscheiben.

**Claims**

1. Plasticiser-containing foils formed from partially acetalised polyvinyl alcohols, characterised in that they contain as plasticiser mixtures of
a) esters of organic, cyclic acids with alcohols of 4 to 10 carbon atoms and
b) esters of glycols and aliphatic monobasic acids with 4 to 10 carbon atoms, in the ratio of 85:15 to 15:85% by weight.

2. Plasticiser- containing foils according to claim 1, characterised in that they contain esters of phthalic acid as esters of organic cyclic acids and esters of di-, tri- or tetraethyleneglycol as esters of glycols.

3. Plasticiser-containing foils according to one of claims 1 to 2, characterised in that they contain the plasticiser mixture in amounts of 10 to 40% by weight, preferably 20 to 35% by weight, related to the total weight of the foils.

4. Plasticiser-containing foils according to one of claims 1 to 3, characterised in that the partially acetalised polyvinyl alcohol possesses a hydroxyl group content of 5 to 30% by weight, preferably 16 to 23% by weight, calculated as polyvinyl alcohol.

5. Plasticiser-containing foils according to one of claims 1 to 4, characterised in that they possess a shore hardness A at 23°C between 100 and 20, preferably between 90 and 30.

6. Use of plasticiser-containing foils according to one of claims 1 to 5 for the production of laminated safety glasses.

7. Use of plasticer-containing foils according to one of claims 1 to 6 as adhesive foils for the one- or two-sided bonding of one or several silicate glass panes and/or transparent tough elastic synthetic plastics panes.

## Revendications

1. Feuilles plastifiées en poly(alcools vinyliques) partiellement acétalisés, caractérisées en ce qu'elles contiennent, en tant que mélanges de plastifiants.

a) des esters d'acides organiques cycliques et d'alcools ayant de 4 à 10 atomes de carbone, et

b) des esters de glycols et de monoacides aliphatiques ayant de 4 à 10 atomes de carbone selon une proportion de 85:15 à 15:85 % en poids.

2. Feuilles plastifiées selon la revendication 1, caractérisées en ce qu'elles contiennent en tant qu'esters d'acides organiques cycliques des esters de l'acide phtalique et, en tant qu'esters de glycols, des esters du di-, tri- ou tétraéthylèneglycol.

3. Feuilles plastifiées selon l'une des revendications 1 ou 2, caractérisées en ce qu'elles contiennent le mélange de plastifiants en des quantités de 10 à 40 % en poids, de préférence de 20 à 35 % en poids, par rapport au poids total de la feuille.

4. Feuilles plastifiées selon l'une des revendications 1 à 3, caractérisées en ce que le poly(alcool vinylique) partiellement acétalisé a une teneur en groupes hydroxyle de 5 à 30 % en poids, de préférence de 16 à 23 % en poids, calculée en poly(alcool vinylique).

5. Feuilles plastifiées selon l'une des revendications 1 à 4, caractérisées en ce qu'elles présentent à 23°C une dureté Shore A comprise entre 100 et 20, de préférence entre 90 et 30.

6. Utilisation de feuilles plastifiées selon l'une des revendications 1 à 5, pour la fabrication de verres de sécurité feuilletés.

7. Utilisation de feuilles plastifiées selon l'une des revendications 1 à 6, en tant que feuilles adhésives pour la liaison, sur une face ou sur les deux faces, d'une ou plusieurs vitres en verre aux silicates et/ou vitres en matières plastique viscoélastiques transparentes.